# EUROPEAN PATENT APPLICATION

(11) **EP 4 151 601 A1**
(43) Date of publication of application: **22.03.2023**
(21) Application number: 20935548.6
(22) Date of filing: 13.11.2020
(51) Int. Cl.: C01G 25/00, C01B 3/56, H01M 8/04, H01M 8/12

(54) **ELECTROCHEMICAL PUMP AND FUEL CELL SYSTEM**

(30) Priority: 14.05.2020 JP 2020084983
(71) Applicant: Panasonic Intellectual Property Management Co., Ltd., Osaka-shi, Osaka 540-6207 (JP)
(72) Inventor: MIKAMI Yuichi, Osaka-shi, Osaka 540-6207 (JP); GOTO Takehito, Osaka-shi, Osaka 540-6207 (JP); TERAYAMA Takeshi, Osaka-shi, Osaka 540-6207 (JP); NUNOO Kosuke, Osaka-shi, Osaka 540-6207 (JP); KUROHA Tomohiro, Osaka-shi, Osaka 540-6207 (JP)
(74) Representative: Grünecker Patent- und Rechtsanwälte PartG mbB
(86) International application number: PCT/JP2020/042356
(87) International publication number: WO 2021/229843

(57) **Abstract**

An electrochemical pump of the present disclosure includes a first anode, a first cathode, and a first electrolyte membrane including a proton conductive oxide, and separates hydrogen from a gas containing the hydrogen.

## Description

### Technical Field

The present disclosure relates to an electrochemical pump and a fuel cell system.

### Background Art

Fuel cell systems are conventionally known. For example, such a fuel cell system is described in Patent Literature 1. In this fuel cell system, a fuel exhaust outlet of a fuel cell stack is connected to a first inlet of an electrochemical pump separation unit through a first conduit, and an outlet of the electrochemical pump separation unit is connected to a fuel inlet of the fuel cell stack through a second conduit. This fuel cell stack is a solid oxide fuel cell stack, and the electrochemical pump separation unit includes a non-fluorinated ion exchange ionomer membrane that is a polybenzimidazole membrane. A plurality of heat exchangers are provided between the fuel cell stack and the electrochemical pump separation unit.

### Citation List

### Patent Literature

PTL 1: Japanese Patent No. 5542333

### Summary of Invention

### Technical Problem

The fuel cell system described in Patent Literature 1 still has room for improvement from the points of view of reducing the heat loss of the fuel cell system and downsizing the fuel cell system.

The present disclosure has been made in order to solve the problems discussed above. Objects of the present disclosure are therefore to provide an electrochemical pump that allows a fuel cell system to attain a reduced heat loss and to be downsized while enhancing the fuel utilization rate, and to provide such a fuel cell system.

### Solution to Problem

An electrochemical pump according to one aspect of the present disclosure includes a first anode, a first cathode, and a first electrolyte membrane including a proton conductive oxide, and separates hydrogen from a gas containing the hydrogen.

A fuel cell system according to one aspect of the present disclosure includes the electrochemical pump described above; a solid oxide fuel cell that includes a second anode, a second cathode, and a second electrolyte membrane including a solid oxide electrolyte, and generates electricity by reacting a fuel gas and an oxidant gas with each other; an anode supply line that is connected to the second anode and through which the fuel gas is supplied to the second anode; a second anode discharge line that is connected to the second anode and the first anode and through which a second anode off-gas discharged from the second anode and containing the hydrogen is supplied to the first anode; a recycle gas line that is connected to the first cathode and the anode supply line and through which a first cathode off-gas that contains the hydrogen separated at the electrochemical pump and is discharged from the first cathode is returned to the anode supply line; and a power supply that is connected to the electrochemical pump and transmits power to the electrochemical pump.

### Advantageous Effects of Invention

According to the electrochemical pump and the fuel cell system of the present disclosure, the heat loss can be effectively reduced and the downsizing of the system can be effectively attained while enhancing the fuel utilization rate of the fuel cell system.

### Brief Description of Drawings

[Fig. 1] Fig. 1 is a functional block diagram schematically illustrating a fuel cell system according to a first embodiment of the present disclosure.
[Fig. 2] Fig. 2 is a graph illustrating a relationship between the temperature and the proton conductivity of BaZr_{0.8}Yb_{0.2}O_{3-δ}.
[Fig. 3] Fig. 3 is a functional block diagram schematically illustrating a fuel cell system according to a second embodiment of the present disclosure.
[Fig. 4] Fig. 4 is a functional block diagram schematically illustrating a fuel cell system according to a third embodiment of the present disclosure.
[Fig. 5] Fig. 5 is a functional block diagram schematically illustrating a fuel cell system according to Modification Example 1 of the third embodiment of the present disclosure.
[Fig. 6] Fig. 6 is a functional block diagram schematically illustrating a fuel cell system according to Modification Example 2 of the third embodiment of the present disclosure.
[Fig. 7] Fig. 7 is a functional block diagram schematically illustrating a fuel cell system according to Modification Example 3 of the third embodiment of the present disclosure.
[Fig. 8] Fig. 8 is a functional block diagram schematically illustrating a fuel cell system according to Modification Example 4 of the third embodiment of the present disclosure.
[Fig. 9] Fig. 9 is a functional block diagram schematically illustrating a fuel cell system according to Modification Example 5 of the third embodiment of the present disclosure.
[Fig. 10] Fig. 10 is a functional block diagram schematically illustrating a fuel cell system according to a fourth embodiment of the present disclosure.
[Fig. 11] Fig. 11 is a functional block diagram schematically illustrating a fuel cell system according to a fifth embodiment of the present disclosure.
[Fig. 12] Fig. 12 is a functional block diagram schematically illustrating a fuel cell system according to a sixth embodiment of the present disclosure and other modification examples.

### Description of Embodiments

### (Underlying Knowledge Forming Basis of the Present Disclosure)

The present inventors carried out extensive studies on fuel cell systems so as to reduce the heat loss and to downsize the fuel cell system while enhancing the fuel utilization rate.

In the fuel cell system of Patent Literature 1, electricity is generated from a fuel and air in the fuel cell stack. A fuel exhaust stream containing hydrogen is discharged from the fuel cell stack and is supplied to the electrochemical pump separation unit. In this electrochemical pump separation unit, hydrogen is separated from the fuel exhaust stream and is returned to the fuel cell stack to enhance the fuel utilization rate.

However, the fuel exhaust stream discharged from the fuel cell stack is supplied to the electrochemical pump separation unit after the fuel exhaust stream is cooled to a temperature of less than or equal to 200°C and further to a temperature of greater than or equal to 90°C and less than or equal to 110°C by being passed through a plurality of heat exchangers. The size of the fuel cell system is increased by the use of a plurality of heat exchangers.

Furthermore, the hydrogen is provided into a burner to increase its temperature before the hydrogen is returned from the electrochemical pump separation unit to the fuel cell stack. These cooling of the fuel exhaust stream and heating of the hydrogen cause a heat loss and decrease the power generation efficiency of the fuel cell system.

In contrast, the present inventors have found that a fuel cell system can attain a reduced heat loss and can be downsized while achieving an enhanced fuel utilization rate by using a first electrolyte membrane including a proton conductive oxide in an electrochemical pump. The present disclosure has been made based on this finding.

According to the first aspect of the present disclosure, an electrochemical pump includes a first anode, a first cathode, and a first electrolyte membrane including a proton conductive oxide, and separates hydrogen from a gas containing the hydrogen. When the electrochemical pump is used in a fuel cell system having a fuel cell, the fuel utilization rate of the fuel cell system can be enhanced by designing the fuel cell system so that a cathode off-gas from the electrochemical pump is returned as a fuel gas to the fuel cell through a recycle gas line and an anode supply line. As a result of the first electrolyte membrane including a proton conductive oxide, the electrochemical pump may be operated at a temperature close to that of the fuel cell such as a solid oxide fuel cell. Thus, the heat loss can be reduced by eliminating cooling of the anode off-gas supplied from the fuel cell to the electrochemical pump, and heating of the cathode off-gas returned from the electrochemical pump to the solid oxide fuel cell. Furthermore, the number of heat exchangers between the fuel cell and the electrochemical pump can be reduced, and thus the fuel cell system can be downsized.

According to the second aspect of the present disclosure, the electrochemical pump is such that the first electrolyte membrane includes at least one selected from the group consisting of A1Zr₁₋ₓ₁M1ₓ₁O_{3-δ}, A2Ce₁₋ₓ₂M2ₓ₂O_{3-δ} and A3Zr_{1-x3-y3}Ceₓ₃M3_{y3}O_{3-δ}, A1, A2 and A3 each include at least one element selected from the group consisting of Ba, Sr and Ca, M1, M2 and M3 each include at least one selected from the group consisting of Pr, Nd, Pm, Sm, Eu, Gd, Tb, Dy, Ho, Er, Tm, Yb, Y, Sc, In and Lu, x1 satisfies 0 < x1 < 1, x2 satisfies 0 < x2 < 1, x3 satisfies 0 < x3 < 1, and y3 satisfies 0 < y3 < 1. With this configuration, the electrochemical pump attains high hydrogen separation efficiency and can enhance the energy efficiency of the fuel cell system.

According to the third aspect of the present disclosure, the electrochemical pump is such that A1, A2 and A3 in the first electrolyte membrane include Ba. With this configuration, the electrochemical pump attains high hydrogen separation efficiency and can enhance the energy efficiency of the fuel cell system.

According to the fourth aspect of the present disclosure, the electrochemical pump is such that the first electrolyte membrane includes BaZr₁₋ₓ₁M1ₓ₁O_{3-δ}. With this configuration, the electrochemical pump attains high hydrogen separation efficiency and can enhance the energy efficiency of the fuel cell system.

According to the fifth aspect of the present disclosure, the electrochemical pump is such that M1 in the first electrolyte membrane includes at least Yb. With this configuration, the electrochemical pump attains high hydrogen separation efficiency and can enhance the energy efficiency of the fuel cell system.

According to the sixth aspect of the present disclosure, at least part of the electrochemical pump is operated at a temperature of greater than or equal to 400°C. Such an electrochemical pump can be operated while the first electrolyte membrane exhibits good proton conductivity.

According to the seventh aspect of the present disclosure, the electrochemical pump is accommodated together with a combustor, a fuel cell or a reformer in a thermally insulated space formed by a thermally insulating member. With this configuration, the electrochemical pump is thermally insulated together with the combustor, the fuel cell or the reformer, and the heat loss of the fuel cell system can be reduced.

According to the eighth aspect of the present disclosure, a fuel cell system includes the electrochemical pump described above; a solid oxide fuel cell that includes a second anode, a second cathode, and a second electrolyte membrane including a solid oxide electrolyte, and generates electricity by reacting a fuel gas and an oxidant gas with each other; an anode supply line that is connected to the second anode and through which the fuel gas is supplied to the second anode; a second anode discharge line that is connected to the second anode and the first anode and through which a second anode off-gas discharged from the second anode and containing the hydrogen is supplied to the first anode; a recycle gas line that is connected to the first cathode and the anode supply line and through which a first cathode off-gas that contains the hydrogen separated at the electrochemical pump and is discharged from the first cathode is returned to the anode supply line; and a power supply that is connected to the electrochemical pump and transmits power to the electrochemical pump.

With the above configuration, the first cathode off-gas is returned as a fuel gas from the electrochemical pump to the solid oxide fuel cell through the recycle gas line and the anode supply line, and the fuel utilization rate of the fuel cell system can be thus enhanced. Because the first electrolyte membrane includes a proton conductive oxide, the electrochemical pump is operated at a temperature close to that of the solid oxide fuel cell. Thus, the heat loss can be reduced by eliminating cooling of the second anode off-gas supplied from the solid oxide fuel cell to the electrochemical pump, and heating of the second cathode off-gas returned from the electrochemical pump to the solid oxide fuel cell. Furthermore, the number of heat exchangers between the solid oxide fuel cell and the electrochemical pump can be reduced, and thus the fuel cell system can be downsized.

According to the ninth aspect of the present disclosure, the fuel cell system is such that at least part of the electrochemical pump is operated at a temperature of greater than or equal to 400°C. With this configuration, the electrochemical pump can be operated while the first electrolyte membrane exhibits good proton conductivity, and thus the fuel utilization rate of the fuel cell system can be enhanced.

According to the tenth aspect of the present disclosure, the fuel cell system is such that the temperature difference between the temperature T1 of the solid oxide fuel cell and the temperature T2 of the electrochemical pump is less than or equal to 200°C when the solid oxide fuel cell is operated at T1 of greater than or equal to 600 and less than or equal to 800°C, and is less than or equal to 400°C when the solid oxide fuel cell is operated while T1 is greater than or equal to 800°C and less than or equal to 1000°C. With this configuration, the electrochemical pump and the solid oxide fuel cell can be each operated at a suitable temperature.

According to the eleventh aspect of the present disclosure, the fuel cell system is such that the temperature T1 of the solid oxide fuel cell is higher than the temperature T2 of the electrochemical pump. With this configuration, the electrochemical pump and the solid oxide fuel cell can be each operated at a suitable temperature.

According to the twelfth aspect of the present disclosure, the fuel cell system of the first aspect further includes a reformer that is provided on the anode supply line and reforms a fuel to produce the fuel gas. With this configuration, the fuel gas that is supplied to the solid oxide fuel cell is produced by reforming of a fuel, and thus the solid oxide fuel cell can be prevented from deterioration due to, for example, carbon precipitation.

According to the thirteenth aspect of the present disclosure, the fuel cell system further includes a thermally insulating member that accommodates the solid oxide fuel cell and the electrochemical pump in a thermally insulated space, and the solid oxide fuel cell and the electrochemical pump are accommodated in the same thermally insulated space. With this configuration, the electrochemical pump and the solid oxide fuel cell are thermally insulated, and the heat loss of the fuel cell system can be reduced. Furthermore, because the electrochemical pump and the solid oxide fuel cell are insulated together by sharing the thermally insulating member, the increase in cost associated with the thermally insulating member as well as the increase in size of the fuel cell system can be suppressed.

According to the fourteenth aspect of the present disclosure, the fuel cell system further includes a thermally insulating member that accommodates the electrochemical pump and the reformer in a thermally insulated space, and the electrochemical pump and the reformer are accommodated in the same thermally insulated space. With this configuration, the electrochemical pump and the reformer are thermally insulated to reduce the heat loss of the fuel cell system. Furthermore, because the electrochemical pump and the reformer are insulated together by sharing the thermally insulating member, the increase in cost associated with the thermally insulating member as well as the increase in size of the fuel cell system can be suppressed.

According to the fifteenth aspect of the present disclosure, the fuel cell system further includes a thermally insulating member that accommodates the solid oxide fuel cell and the electrochemical pump in a thermally insulated space, and the thermally insulated space includes a first thermally insulated space accommodating the solid oxide fuel cell, and a second thermally insulated space insulated from the first thermally insulated space and accommodating the electrochemical pump. With this configuration, the electrochemical pump and the solid oxide fuel cell can be each operated at a suitable temperature while ensuring that the heat loss of the fuel cell system is reduced.

According to the sixteenth aspect of the present disclosure, the fuel cell system further includes a thermally insulating member that accommodates the reformer and the electrochemical pump in a thermally insulated space, and the thermally insulated space includes a first thermally insulated space accommodating the reformer, and a second thermally insulated space insulated from the first thermally insulated space and accommodating the electrochemical pump. With this configuration, the electrochemical pump and the reformer can be each operated at a suitable temperature while ensuring that the heat loss of the fuel cell system is reduced.

According to the seventeenth aspect of the present disclosure, the fuel cell system of the third or fourth aspect is such that the thermally insulating member accommodates the recycle gas line in the thermally insulated space. With this configuration, the decrease in gas temperature is reduced when the gas is circulated from the electrochemical pump to the solid oxide fuel cell through the recycle gas line, and thus the heat loss of the fuel cell system can be reduced.

According to the eighteenth aspect of the present disclosure, the fuel cell system of any one of the first to sixth aspects further includes a first anode discharge line that is connected to the first anode and through which a first anode off-gas discharged from the first anode flows, and a combustor that is provided on the first anode discharge line and combusts the first anode off-gas. The first anode off-gas may contain, for example, carbon monoxide. With the above configuration, the first anode off-gas can be discharged after the carbon monoxide is combusted. Furthermore, the combustion heat can be used to heat the components (for example, the reformer and the recycle gas line) to reduce the heat loss of the fuel cell system.

According to the nineteenth aspect of the present disclosure, the fuel cell system of the seventh aspect further includes a reformer that is provided on the anode supply line and reforms a fuel to produce the fuel gas, and a first heat exchanger that exchanges heat between the first anode off-gas discharged from the first anode, and the fuel to be supplied to the reformer. With this configuration, the fuel gas is heated by the first anode off-gas, and the heat loss of the fuel cell system can be reduced.

According to the twentieth aspect of the present disclosure, the fuel cell system of any one of the first to eighth aspects further includes a cathode supply line that is connected to the second cathode and through which the oxidant gas is supplied to the second cathode, a cathode discharge line that is connected to the second cathode and through which a second cathode off-gas discharged from the second cathode flows, and a second heat exchanger that exchanges heat between the oxidant gas to be supplied to the second cathode, and the second cathode off-gas discharged from the second cathode. With this configuration, the oxidant gas is heated by the second cathode off-gas, and the heat loss of the fuel cell system can be reduced.

According to the twenty-first aspect of the present disclosure, the fuel cell system of any one of the first to ninth aspects further includes a reformer that is provided on the anode supply line and reforms a fuel to produce the fuel gas, and the recycle gas line is connected to the anode supply line between the reformer and the second anode. With this configuration, the first cathode off-gas flows into the anode supply line through the recycle gas line and is supplied as a fuel gas to the second anode to enhance the fuel utilization rate.

Hereinbelow, embodiments of the present disclosure will be described with reference to the drawings. In the following, constituent members that are identical or corresponding to one another throughout the drawings are assigned with the same numerals, and the description of such constituent members is sometimes omitted.

### [First embodiment]

### <Configuration of fuel cell system>

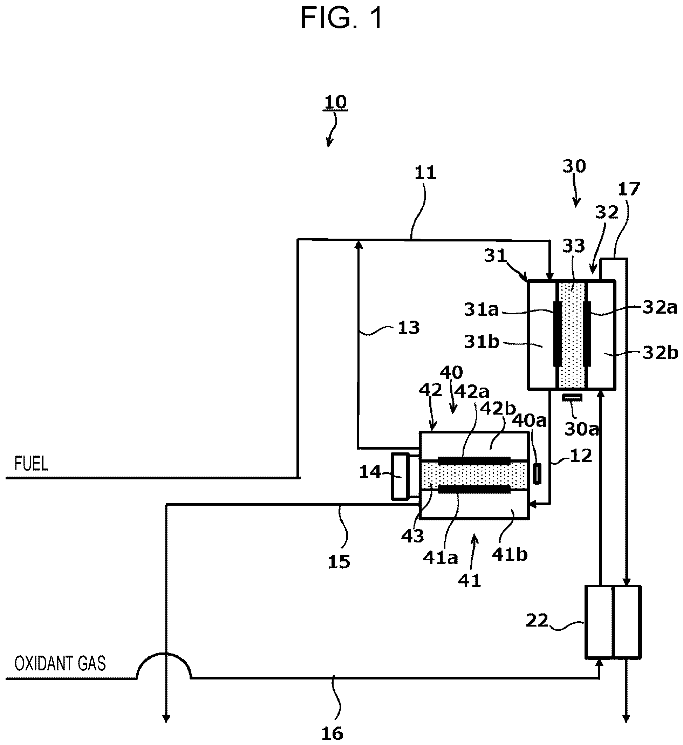

As illustrated in Fig. 1, a fuel cell system 10 according to the first embodiment of the present disclosure includes a solid oxide fuel cell (SOFC 30), an electrochemical pump 40, and temperature meters 30a and 40a. The electrochemical pump 40 has a stack in which a plurality of cells are stacked on top of one another. The cells in the electrochemical pump 40 each include a first anode 41, a first cathode 42 and a first electrolyte membrane 43. The SOFC 30 has a fuel cell stack. The fuel cell stack has a plurality of cells, and the cells are stacked on top of one another so as to be electrically connected in series. The cells in the fuel cell stack each include a second anode 31, a second cathode 32 and a second electrolyte membrane 33. Incidentally, Fig. 1 illustrates individual cells. Configurations will be described in detail below.

The SOFC 30 generates electricity by the chemical reaction of a fuel gas and an oxidant gas based on the following chemical formula (1) at the second anode 31 and the following chemical formula (2) at the second cathode 32. In addition, the chemical reactions for power generation produce water as illustrated in the overall formula (3) below.

Second anode: 2H₂ + 2O²⁻ → 2H₂O + 4e⁻ (1)

Second cathode: O₂ + 4e⁻ → 2O²⁻ (2)

Overall formula: 2H₂ + O₂ → 2H₂O (3)

The second anode 31 has a second anode catalyst layer 31a and a second anode passage 31b. The second anode 31 may have a second anode diffusion layer between the second anode catalyst layer 31a and the second anode passage 31b. In this case, the second anode catalyst layer 31a and the second anode diffusion layer may be integral with each other. The second anode passage 31b has an inlet and an outlet.

The second anode catalyst layer 31a is disposed on one side of the second electrolyte membrane 33, and includes a catalyst for promoting the electrochemical oxidation reaction of hydrogen. A metal such as Ni may be used as the catalyst. The second anode catalyst layer 31a may be composed of a cermet. A cermet is a mixture of a metal and a ceramic material. Examples of the cermets include a mixture of Ni and stabilized zirconia (for example, yttria-stabilized zirconia: YSZ), and a mixture of Ni and a ceria-containing oxide. The second anode catalyst layer 31a composed of a cermet has a larger number of reaction active sites for oxidizing hydrogen, thus promoting the oxidation reaction. Furthermore, the second anode catalyst layer 31a may be formed of a porous body in order to promote the diffusion of water generated by the oxidation of hydrogen.

The second cathode 32 has a second cathode catalyst layer 32a and a second cathode passage 32b. The second cathode 32 may have a second cathode diffusion layer between the second cathode catalyst layer 32a and the second cathode passage 32b. In this case, the second cathode catalyst layer 32a and the second cathode diffusion layer may be integral with each other. The second cathode passage 32b has an inlet and an outlet.

The second cathode catalyst layer 32a is disposed on the other side of the second electrolyte membrane 33, and includes a catalyst for promoting the electrochemical reduction reaction of oxygen. The catalyst may be an oxide containing at least one selected from the group consisting of Mn, Fe, Co and Ni. Specific examples of the catalysts include lanthanum strontium cobalt iron composite oxide (LSCF), lanthanum strontium cobalt composite oxide (LSC), lanthanum strontium iron composite oxide (LSF), lanthanum strontium manganese composite oxide (LSM), barium strontium cobalt iron composite oxide (BSCF), samarium strontium cobalt composite oxide (SSC), lanthanum nickel iron composite oxide, lanthanum nickel composite oxide, and barium gadolinium lanthanum cobalt composite oxide. The catalyst may be a composite of an oxide containing at least one selected from the group consisting of Mn, Fe, Co and Ni, and another oxide or a metal. The second cathode 32 may be formed of a porous body in order to promote the diffusion of oxide ions (O²⁻) generated by the reduction of oxygen.

The second electrolyte membrane 33 is sandwiched between the second anode 31 and the second cathode 32. The second electrolyte membrane 33 includes a solid oxide electrolyte. For example, the second electrolyte membrane 33 is formed of an oxide ion conductive solid electrolyte, and use is made of an oxide ion conductor such as stabilized zirconia (for example, yttria-stabilized zirconia: YSZ), a lanthanum gallate-containing oxide or a ceria-containing oxide. The second electrolyte membrane 33 may be formed of a dense body having a measured density of, for example, greater than or equal to 95% of the theoretical density.

The SOFC 30 is operated at a temperature at which the second electrolyte membrane 33 exhibits oxide ion conductivity, for example, at a temperature of greater than or equal to 600°C and less than or equal to 1000°C, preferably at a temperature of greater than or equal to 700°C and less than or equal to 1000°C. The temperature of the SOFC 30 is measured with, for example, the temperature meter 30a. For example, the temperature meter 30a is a thermocouple, and may be provided in contact with the second electrolyte membrane 33 or may be provided so as to measure the temperature near the second electrolyte membrane 33. The temperature meter 30a may be other known temperature meter, and may be installed in a known manner so as to measure the temperature of the stack or the cell.

The electrochemical pump 40 separates hydrogen from a hydrogen-containing gas that contains hydrogen based on the following chemical formula (4) at the first anode 41 and the following chemical formula (5) at the first cathode 42.

First anode: H₂ → 2H⁺ + 2e⁻ (4)

First cathode: 2H⁺ + 2e⁻ → H₂ (5)

The first anode 41 has a first anode catalyst layer 41a and a first anode passage 41b. The first anode 41 may have a first anode diffusion layer between the first anode catalyst layer 41a and the first anode passage 41b. In this case, the first anode catalyst layer 41a and the first anode diffusion layer may be integral with each other. The first anode passage 41b has an inlet and an outlet.

The first anode catalyst layer 41a is disposed on one side of the first electrolyte membrane 43, and includes a catalyst for promoting the electrochemical oxidation reaction of hydrogen. For example, the catalyst may be a metal such as Ni. The first anode catalyst layer 41a may be composed of a cermet. The cermet may be a mixture of Ni and a proton conductive oxide, with examples including a mixture of Ni and BaZr₁₋ₓ₁Ybₓ₁O_{3-δ}. The first anode catalyst layer 41a composed of a cermet has a larger number of reaction active sites for oxidizing hydrogen, thus promoting the oxidation reaction of hydrogen. The first anode catalyst layer 41a may be formed of a porous body in order to promote the diffusion of hydrogen and steam.

The first cathode 42 has a first cathode catalyst layer 42a and a first cathode passage 42b. The first cathode 42 may have a first cathode diffusion layer between the first cathode catalyst layer 42a and the first cathode passage 42b. In this case, the first cathode catalyst layer 42a and the first cathode diffusion layer may be integral with each other. The first cathode passage 42b has an outlet.

The first cathode catalyst layer 42a is disposed on the other side of the first electrolyte membrane 43, and includes a catalyst for promoting the electrochemical reduction reaction of protons (H⁺). A metal such as Ni may be used as the catalyst. The first cathode catalyst layer 42a may be composed of a cermet. The cermet may be a mixture of Ni and a proton conductive oxide, with examples including a mixture of Ni and BaZr₁₋ₓ₁Ybₓ₁O_{3-δ}. The first cathode catalyst layer 42a composed of a cermet has a larger number of reaction active sites for reducing protons, thus promoting the reduction reaction of protons. The first cathode 42 may be formed of a porous body in order to promote the diffusion of hydrogen formed by the reduction reaction of protons.

The first electrolyte membrane 43 includes a proton conductive oxide. Examples of such oxides include proton conductive ceramics. The first electrolyte membrane may be such that the first electrolyte membrane includes at least one selected from the group consisting of A1Zr₁₋ₓ₁M1ₓ₁O_{3-δ}, A2Ce₁₋ₓ₂M2ₓ₂O_{3-δ} and A3Zr_{1-x3-y3}Ceₓ₃M3_{y3}O_{3-δ}, A1, A2 and A3 each include at least one element selected from the group consisting of Ba, Sr and Ca, M1, M2 and M3 each include at least one element selected from the group consisting of Pr, Nd, Pm, Sm, Eu, Gd, Tb, Dy, Ho, Er, Tm, Yb, Y, Sc, In and Lu, x1 satisfies 0 < x1 < 1, x2 satisfies 0 < x2 < 1, x3 satisfies 0 < x3 < 1, and y3 satisfies 0 < y3 < 1. Furthermore, A1Zr₁₋ₓ₁M1ₓ₁O_{3-δ}, A2Ce₁₋ₓ₂M2ₓ₂O_{3-δ} and A3Zr_{1-x3-y3}Ceₓ₃M3_{y3}O_{3-δ} may satisfy x3 + y3 < 1, and 0 < δ < 0.5. Furthermore, A1, A2 and A3 in the first electrolyte membrane may include Ba.

The value of δ changes in accordance with the value of x1 and the environment of the first electrolyte membrane 43 (for example, temperature, oxygen partial pressure, steam partial pressure). Furthermore, the first electrolyte membrane 43 may be formed of a dense body having a measured density of, for example, greater than or equal to 95% of the theoretical density.

For example, the first electrolyte membrane 43 has a proton conductivity greater than or equal to a predetermined value (for example, 1.0 × 10⁻³ S/cm) in a range of temperatures of greater than or equal to 400°C. As a specific example, the first electrolyte membrane 43 principally including BaZr_{0.8}Y_{0.2}O_{3-α} exhibits a proton conductivity of greater than or equal to 1.0 × 10⁻² S/cm in a range of temperatures of greater than or equal to 600°C. The electrochemical pump 40 is operated at a temperature at which the first electrolyte membrane 43 exhibits a proton conductivity greater than or equal to a predetermined value, for example, at a temperature of greater than or equal to 400°C and less than or equal to 800°C, preferably at a temperature of greater than or equal to 600°C and less than or equal to 800°C.

The first electrolyte membrane may be composed of BaZr₁₋ₓ₁M1ₓ₁O_{3-δ}. BaZr₁₋ₓ₁M1ₓ₁O_{3-δ}, BaCe₁₋ₓ₂M2ₓ₂O_{3-δ} and BaZr_{1-x3-y3}Ceₓ₃M3_{y3}O_{3-δ} have oxide ion conductivity in addition to proton conductivity in a high temperature region (for example, temperatures of greater than or equal to 600°C). Of the above materials, the composite oxide represented by BaZr₁₋ₓ₁M1ₓ₁O_{3-δ} exhibits a high proton transport number even in the high temperature region. Thus, the electrochemical pump 40 that includes the first electrolyte membrane 43 formed of BaZr₁₋ₓ₁M1ₓ₁O_{3-δ} can separate hydrogen with high efficiency. Incidentally, the proton transport number does not include the conduction of holes due to oxygen vacancies.

In the first electrolyte membrane, M1 may include at least Yb. The first electrolyte membrane 43 may be formed of BaZr₁₋ₓ₁M1ₓ₁O_{3-δ} that is BaZr₁₋ₓ₁Ybₓ₁O_{3-δ}. This BaZr₁₋ₓ₁Ybₓ₁O_{3-δ} can exhibit higher proton conductivity than other materials represented by BaZr₁₋ₓ₁M1ₓ₁O_{3-δ}. Thus, the electrochemical pump 40 attains a high proton transport number and can separate hydrogen with high efficiency.

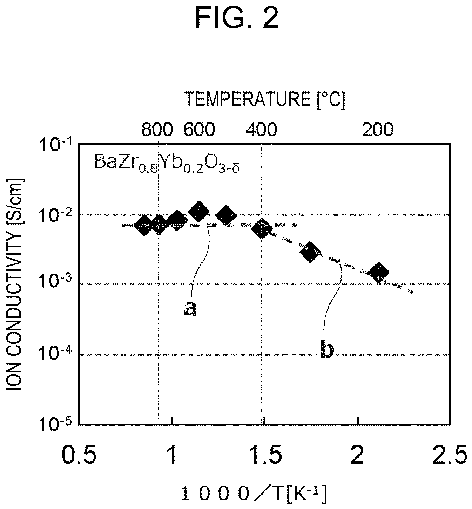

Fig. 2 is a graph illustrating a relationship between the temperature and the proton conductivity of BaZr_{0.8}Yb_{0.2}O_{3-δ}. In Fig. 2, the abscissa indicates the temperature and values of 1000/T (temperature), and the ordinate indicates the proton conductivity. As illustrated in Fig. 2, the proton conductivity of BaZr_{0.8}Yb_{0.2}O_{3-δ} changes along the broken line a at temperatures greater than or equal to 400°C, and shifts along the broken line b at less than 400°C.

For example, the temperature of BaZr_{0.8}Yb_{0.2}O_{3-δ} is a value obtained by measuring the temperature near the sample with a thermocouple. For example, the proton conductivity of BaZr_{0.8}Yb_{0.2}O_{3-δ} is calculated from the resistance of an evaluation pellet prepared from a powder of BaZr_{0.8}Yb_{0.2}O_{3-δ}, and the thickness of the evaluation pellet. The resistance of the evaluation pellet may be measured based on the AC impedance method. For example, the evaluation pellet is prepared by pressing a powder of BaZr_{0.8}Yb_{0.2}O_{3-δ}, heat-treating the compact to form a sintered pellet, cutting the sintered pellet into a disk having a thickness of about 500 µm, and polishing both sides with, for example, a lapping film sheet having 3 µm abrasive grains. Collector electrodes for the AC impedance measurement may be formed on both sides of the polished evaluation pellet. For example, the collector electrodes may be obtained by applying an Ag paste by a screen printing method, and heat-treating the paste.

For example, the proton conductivity may be determined in the following manner. Using Solartron 1287 (manufactured by Solartron Analytical), AC signals with an amplitude of 10 mV are applied to the evaluation pellet in the range of frequencies of 1 MHz to 0.01 Hz. The measurement is performed in a humidified hydrogen atmosphere at an appropriate desired measurement temperature. With respect to the arc in the Cole-Cole plot that has been output, the intersections of the arc and the real axis are determined. The real axis is the axis on which values on the Y axis in the Cole-Cole plot graph are 0. Of the intersections obtained, the intersection on the high frequency side is taken as the resistance of the evaluation pellet. The proton conductivity of the sample is calculated based on the resistance obtained and the thickness of the evaluation pellet.

BaZr_{0.8}Yb_{0.2}O_{3-δ} exhibits good proton conductivity at a temperature of greater than or equal to 400°C. A similar tendency is observed in the substances represented by A1Zr₁₋ₓ₁M1ₓ₁O_{3-δ} other than BaZr_{0.8}Yb_{0.2}O_{3-δ}, A2Ce₁₋ₓ₂M2ₓ₂O_{3-δ} and A3Zr_{1-x3-y3}Ceₓ₃M3_{y3}O_{3-δ}.

At least part or the whole of the electrochemical pump 40 may be operated at a temperature of greater than or equal to 400°C. In this case, the electrochemical pump 40 can be operated while the first electrolyte membrane 43 exhibits good proton conductivity. At least part or the whole of the electrochemical pump 40 may be operated at a temperature of greater than or equal to 500°C or at a temperature of greater than or equal to 600°C. At least part or the whole of the electrochemical pump 40 may be operated at a temperature of less than or equal to 900°C or at a temperature of less than or equal to 800°C. Here, the term "at least part" indicates a portion of the structure of the electrochemical pump 40, and may be, for example, a portion of the first electrolyte membrane 43. The temperature of the electrochemical pump 40 is measured with the temperature meter 40a. For example, the temperature meter 40a is a thermocouple, and may be provided in contact with the first electrolyte membrane 43 or may be provided so as to measure the temperature near the first electrolyte membrane 43. The temperature meter 40a may be a known temperature meter, and may be installed in a known manner so as to measure the temperature of the stack or the cell.

The fuel cell system 10 further includes an anode supply line 11, a first anode second anode discharge line 12, a recycle gas line 13, a power supply 14, a second anode first anode discharge line 15, a cathode supply line 16, and a cathode discharge line 17. The anode supply line 11 is connected to the inlet of the second anode 31 and to a fuel gas supply source, and supplies a fuel gas to the second anode 31. For example, the fuel gas is a hydrogen-containing gas that contains hydrogen. Examples of the supply sources include hydrogen tanks containing hydrogen, hydrogen production devices such as water electrolyzers, and hydrogen stations and hydrogen infrastructures having hydrogen tanks and hydrogen production devices.

The second anode discharge line 12 is connected to the outlet of the second anode 31 and to the inlet of the first anode 41, and supplies the second anode off-gas discharged from the second anode 31 to the first anode 41. The second anode off-gas includes water generated by the chemical reactions in the SOFC 30, and the fuel gas remaining after the chemical reactions. Because the fuel gas contains hydrogen, the second anode off-gas including the fuel gas contains hydrogen. When, for example, the fuel utilization rate at the SOFC 30 is 80%, 20% of the hydrogen contained in the fuel gas is not consumed by the chemical reactions at the SOFC 30 and is contained in the second anode off-gas.

The recycle gas line 13 is connected to the outlet of the first cathode 42 and to the anode supply line 11. The recycle gas line 13 guides the first cathode off-gas discharged from the first cathode 42 back to the anode supply line 11. The first cathode off-gas contains hydrogen separated from the second anode off-gas by the electrochemical pump 40.

The cathode supply line 16 is connected to the inlet of the second cathode 32 and to an oxidant gas supply source, and supplies an oxidant gas to the second cathode 32. The oxidant gas is a gas containing oxygen, and is, for example, air or a synthetic gas that contains oxygen. When air is used as the oxidant gas, the oxidant gas supply source is, for example, an air blower, or a suction device that suctions air into the fuel cell system 10.

The first anode discharge line 15 is connected to the outlet of the first anode 41 and communicates with, for example, the outside of the fuel cell system 10. Through the first anode discharge line 15, the first anode off-gas discharged from the first anode 41 is discharged to the outside of the fuel cell system 10 and is released to the atmosphere. The first anode off-gas is a gas that is left after hydrogen is separated from the second anode off-gas by the electrochemical pump 40.

The cathode discharge line 17 is connected to the outlet of the second cathode 32 and communicates with, for example, the outside of the fuel cell system 10. Through the cathode discharge line 17, the second cathode off-gas discharged from the second cathode 32 is discharged to the outside of the fuel cell system 10 and is released to the atmosphere. The second cathode off-gas contains the oxidant gas remaining after the chemical reactions at the SOFC 30.

For example, the power supply 14 is a battery, and is connected to the first anode 41 and the first cathode 42 of the electrochemical pump 40 to transmit power to the electrochemical pump 40. Thus, the electrochemical pump 40 is driven by the power from the power supply 14. The electrochemical pump 40 may have a terminal connected to an external power supply, and a current may be applied from the external power supply connected to the terminal.

### <Operation of fuel cell system>

In the fuel cell system 10, the SOFC 30 is held at a temperature that allows the SOFC 30 to attain high power generation efficiency, for example, a temperature of greater than or equal to 600°C and less than or equal to 1000°C, preferably a temperature of greater than or equal to 700°C and less than or equal to 1000°C. In the SOFC 30, the fuel gas is supplied to the second anode 31 through the anode supply line 11, and the oxidant gas is supplied to the second cathode 32 through the cathode supply line 16.

In the second cathode 32, in the manner described above, the oxidant gas is supplied to the second cathode catalyst layer 32a through the second cathode passage 32b. At the second cathode catalyst layer 32a, oxygen in the oxidant gas is reduced as in the chemical formula (2) described hereinabove to generate oxide ions. The oxide ions are conducted through the second electrolyte membrane 33 from the second cathode 32 to the second anode 31.

In the second anode 31, the fuel gas is supplied to the second anode catalyst layer 31a through the second anode passage 31b. At the second anode catalyst layer 31a, hydrogen in the fuel gas is oxidized by the oxide ions as in the chemical formula (1) described hereinabove to generate water and electrons. The electrons flow through an external circuit to generate electricity.

The second anode off-gas is supplied from the second anode 31 of the SOFC 30 to the first anode 41 of the electrochemical pump 40 through the second anode discharge line 12. The electrochemical pump 40 is held at a temperature that allows the electrochemical pump 40 to attain high hydrogen separation efficiency, for example, a temperature of greater than or equal to 400°C and less than or equal to 800°C, preferably a temperature of greater than or equal to 600°C and less than or equal to 800°C. A current is applied from the power supply 14 to the electrochemical pump 40.

Here, the temperature T1 of the SOFC 30 may be higher than the temperature T2 of the electrochemical pump 40. The temperature difference between the temperature T1 of the SOFC 30 and the temperature T2 of the electrochemical pump 40 may be less than or equal to 200°C when the T1 is greater than or equal to 600°C and less than or equal to 800°C, and may be less than or equal to 400°C when the T1 is greater than or equal to 800°C and 1000°C. With this configuration, the electrochemical pump and the solid oxide fuel cell can be each operated at a suitable temperature. The temperature T1 of the SOFC 30 is measured with the temperature meter 30a as described hereinabove, and the temperature T2 of the electrochemical pump 40 is measured with the temperature meter 40a as described hereinabove.

In the electrochemical pump 40, the second anode off-gas is supplied to the first anode catalyst layer 41a in the first anode 41 through the first anode passage 41b. At the first anode catalyst layer 41a, hydrogen in the second anode off-gas is oxidized as in the chemical formula (4) described hereinabove to generate protons and electrons. The protons are conducted through the first electrolyte membrane 43 from the first anode 41 to the first cathode 42.

In the first cathode 42, the protons are reduced by gaining electrons at the first cathode catalyst layer 42a as in the chemical formula (5) described hereinabove, and the consequent hydrogen flows in the first cathode passage 42b. The hydrogen thus separated from the second anode off-gas is discharged as the first cathode off-gas from the first cathode passage 42b of the first cathode 42, and returns to the anode supply line 11 through the recycle gas line 13. The first cathode off-gas then joins the fuel gas flowing through the anode supply line 11, and is supplied as the fuel gas to the second anode 31 of the SOFC 30 and is used to generate electricity at the SOFC 30.

As described above, the fuel cell system 10 is designed so that hydrogen that remains without being consumed in the power generation at the SOFC 30 is separated from the second anode off-gas by the electrochemical pump 40 and is returned to the SOFC 30 through the recycle gas line 13 and the anode supply line 11. In this manner, the fuel utilization rate of the SOFC 30 (the proportion of hydrogen used in power generation relative to the fuel gas supplied to the SOFC 30) can be enhanced. Because the power generation efficiency of the SOFC 30 is determined by multiplying the voltage efficiency by the fuel utilization rate, the enhancement in fuel utilization rate leads to an improvement in power generation efficiency.

In the fuel cell system 10, further, the first electrolyte membrane 43 used in the electrochemical pump 40 includes a proton conductive oxide. This configuration allows the electrochemical pump 40 to be operated at a range of temperatures that is the same as or close to the range of operating temperatures of the SOFC 30 while ensuring that the electrochemical pump 40 will have no or small decrease in hydrogen separation efficiency and the SOFC 30 will have no or small decrease in power generation efficiency. Thus, the heat loss can be reduced when the second anode off-gas is supplied from the SOFC 30 to the electrochemical pump 40 and when the first cathode off-gas is returned from the electrochemical pump 40 to the SOFC 30.

Because the electrochemical pump 40 and the SOFC 30 can be operated at the same range of temperatures as each other or at similar ranges of temperatures to each other, the second anode off-gas may be supplied from the SOFC 30 to the electrochemical pump 40 while requiring a small drop of the temperature of the second anode off-gas, and the first cathode off-gas may be returned from the electrochemical pump 40 to the SOFC 30 while requiring a small rise in the temperature of the first cathode off-gas. Thus, the number of heat exchangers provided between the electrochemical pump 40 and the SOFC 30 can be reduced, and the fuel cell system 10 can be downsized.

### [Second embodiment]

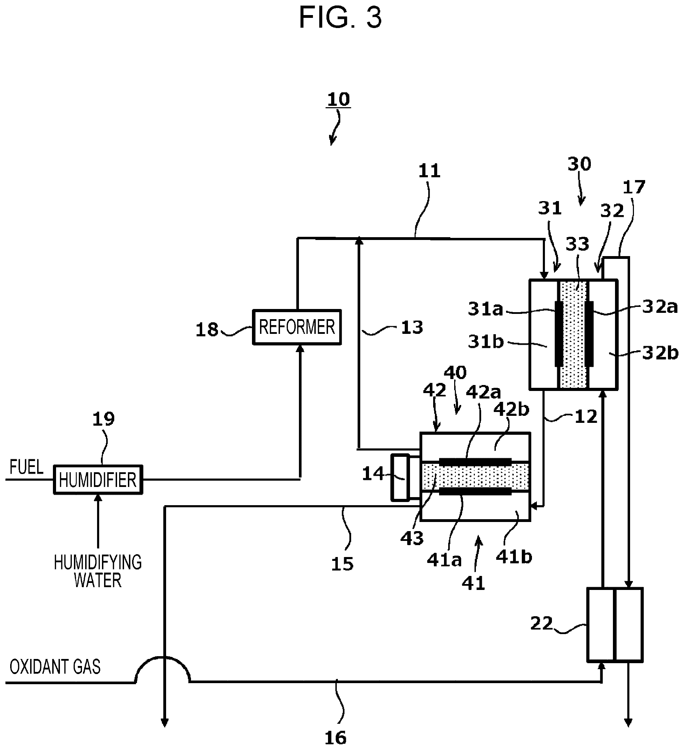

As illustrated in Fig. 3, a fuel cell system 10 according to the second embodiment differs from the fuel cell system 10 according to the first embodiment in that the fuel cell system 10 further includes a reformer 18 that is provided on the anode supply line 11 and reforms a fuel to produce a fuel gas.

The anode supply line 11 is connected to the inlet of the second anode 31 and the fuel supply source. For example, the fuel may be a hydrocarbon gas such as methane or propane, or natural gas or LP gas containing a hydrocarbon gas. Examples of the fuel supply sources include fuel tanks containing a fuel, and fuel infrastructures.

The reformer 18 is arranged on the anode supply line 11 upstream of the intersection between the anode supply line 11 and the recycle gas line 13. The reformer 18 reforms the fuel supplied through the anode supply line 11 into a fuel gas. For example, this reforming is made by a steam reforming method or an oxidative reforming method. When a steam reforming method is adopted, the fuel cell system 10 may further include a humidifier 19. The humidifier 19 is arranged on the anode supply line 11 upstream of the reformer 18.

For example, the humidifier 19 has a porous body such as a polymer film or a sponge, and an enthalpy wheel. Water (humidifying water) is supplied to the humidifier 19. For example, the humidifying water may be supplied from the outside of the fuel cell system 10. When the fuel cell system 10 has a combustor, the first anode off-gas may be combusted in the combustor, steam may be condensed from the combustion off-gas resulting from the combustion, and the condensed water may be used in the humidifier 19.

The humidifier 19 supplies humidifying water in the form of steam to the anode supply line 11 to humidify the fuel flowing through the anode supply line 11. For example, the humidified fuel is supplied to the reformer 18 while carrying steam in such an amount that the dew point temperature is greater than or equal to 80°C and less than or equal to 90°C. The number S of the molecules of steam supplied to the reformer 18 per unit time, and the number C of the carbon atoms in the fuel supplied to the reformer 18 per unit time are such that the ratio of S to C (the steam carbon ratio) is, for example, greater than or equal to 1.5 and less than or equal to 3.5, preferably greater than or equal to 2.0 and less than or equal to 3.0, and more preferably greater than or equal to 2.0 and less than or equal to 2.5. When the steam carbon ratio S/C in in this range, the fuel is efficiently steam-reformed.

When a steam reforming method is adopted, the reformer 18 has a reforming catalyst. The reforming catalyst is not particularly limited as long as the catalyst can catalyze the steam reforming reaction. Examples of the reforming catalysts include steam reforming catalysts containing at least one of Ni, Rh, Ru, Ir, Pd, Pt, Re, Co, Fe and Mo as a catalyst metal.

In the reformer 18, the fuel is reacted with steam in the presence of the reforming catalyst to produce hydrogen and carbon monoxide. For example, the fuel represented by CₙHₘ (n and m are both positive real numbers) undergoes the steam reforming reaction as illustrated in the reaction formula (6) below. Furthermore, methane (CH₄) as the fuel undergoes the steam reforming reaction as illustrated in the reaction formula (7) below.

CₙHₘ + nH₂O → nCO + [(m/2) + n]H₂ (6)

CH₄ + H₂O → CO + 3H₂ (7)

The recycle gas line 13 is connected to the anode supply line 11 between the reformer 18 and the second anode 31. Thus, the gas generated at the reformer 18 merges, in the anode supply line 11, with the first cathode off-gas returned from the recycle gas line 13, and these gases are supplied as the fuel gas to the second anode 31 of the SOFC 30. In the SOFC 30, the fuel gas and the oxidant gas are chemically reacted with each other to generate electricity.

The gas generated at the reformer 18 contains carbon monoxide. This carbon monoxide is used as the fuel gas in the SOFC 30 that is operated at a high temperature. Thus, the SOFC 30 can attain an enhancement in power generation efficiency while reducing poisoning of the catalyst by carbon monoxide.

Furthermore, the electrochemical pump 40, which is operated at a range of high temperatures similar to that of the SOFC 30, can separate hydrogen from the second anode off-gas containing carbon monoxide while reducing poisoning of the catalyst by carbon monoxide. Thus, the fuel cell system 10 does not necessarily use a shift reactor for removing carbon monoxide from the gas reformed at the reformer 18. The absence of a shift reactor reduces the size of the fuel cell system 10.

### [Third embodiment]

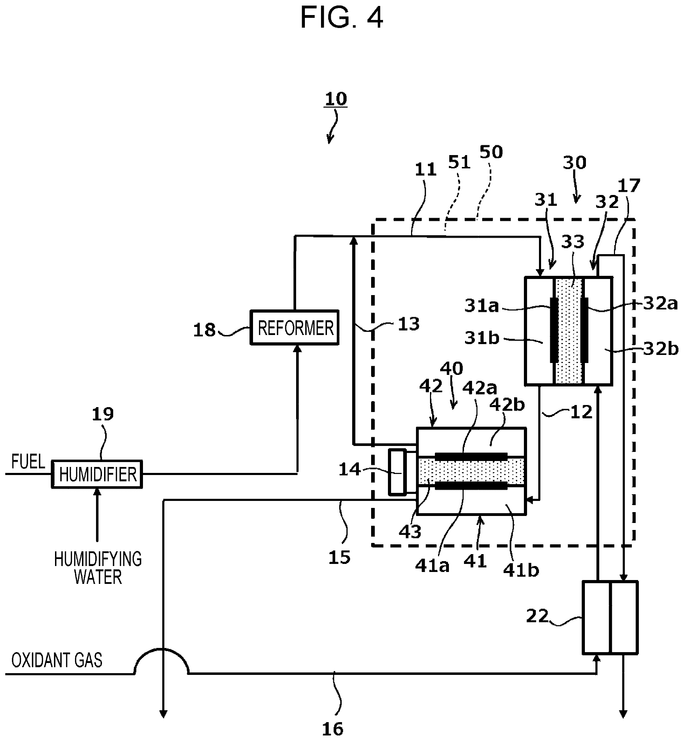

As illustrated in Fig. 4, a fuel cell system 10 according to the third embodiment differs from the fuel cell system 10 according to the first or second embodiment in that the fuel cell system 10 further includes a thermally insulating member 50 that accommodates the SOFC 30 and the electrochemical pump 40 in a thermally insulated space 51. The thermally insulating member 50 has the thermally insulated space 51 in the inside thereof, and thermally insulates the thermally insulated space 51 from the outside. The thermally insulating member 50 may be in contact with the SOFC 30 and the electrochemical pump 40 so as to cover them, or may enclose the SOFC 30 and the electrochemical pump 40 with a space in between.

The type of the thermally insulating member 50 is not particularly limited. Any material having thermal insulating properties (thermally insulating material) may be used. Examples of the thermally insulating materials include microporous thermally insulating materials (Microtherms), glass wool, Superwool, rock wool, ceramic fibers, mineral wool, calcium silicate and hard urethane foams. Furthermore, the thermally insulating material may be a heat resistant and thermally insulating material containing fumed silica as the principal component and also containing an inorganic fibrous substance and an infrared blocking material. Furthermore, the thermally insulating member 50 may have a vacuum thermally insulating material. The vacuum thermally insulating material has an outer cover material and a core material, and the outer cover material accommodates the core material in the inside thereof and is sealed under reduced pressure. In particular, a suitable material is, for example, a microporous thermally insulating material that has high thermally insulating properties and has heat resistance at 700 to 1000°C that are suitable SOFC operation temperatures. For example, the exterior material is a metal laminate film that is a stack of a metal foil and a resin film. For example, the core material is a porous structural material such as glass wool.

A portion of the recycle gas line 13 is arranged in the thermally insulated space 51, and the rest is disposed outside the thermally insulated space 51. The whole of the recycle gas line 13 may be arranged outside the thermally insulated space 51. When the fuel cell system 10 includes a reformer 18, the reformer 18 is arranged outside the thermally insulated space 51. For example, the thermally insulating member 50 may be a thermally insulating enclosure having a rectangular parallelepiped shape. The thermally insulating member 50 may be covered with a support material such as a metal plate.

As described above, the SOFC 30 and the electrochemical pump 40 are not insulated separately from each other and are arranged in the same thermally insulated space 51. The thermally insulated space 51 is held at a range of operation temperatures common to the SOFC 30 and the electrochemical pump 40, for example, at a temperature of greater than or equal to 600°C and less than or equal to 800°C, preferably at a temperature of greater than or equal to 700°C and less than or equal to 800°C. Thus, heat may be used effectively in maintaining the SOFC 30 and the electrochemical pump 40 at a range of high operation temperatures. Furthermore, the thermally insulating member 50 insulates the SOFC 30 and the electrochemical pump 40 together, that is, the thermally insulating member 50 can be shared by the SOFC 30 and the electrochemical pump 40. Thus, the increase in cost associated with the thermally insulating member 50 can be suppressed, and the size of the fuel cell system 10 can be reduced.

### <Modification Example 1>

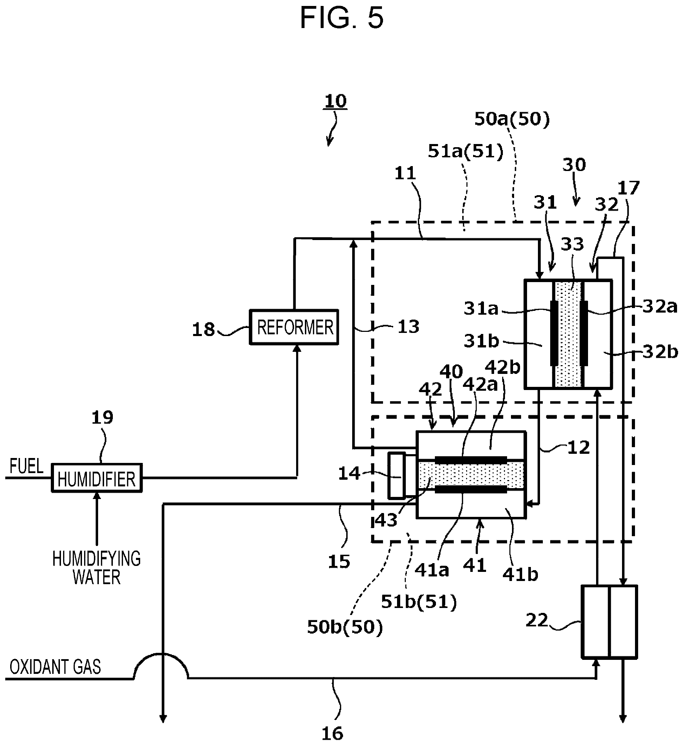

In a fuel cell system 10 according to Modification Example 1 of the third embodiment, as illustrated in Fig. 5, a thermally insulated space 51 includes a first thermally insulated space 51a accommodating the SOFC 30, and a second thermally insulated space 51b insulated from the first thermally insulated space 51a and accommodating the electrochemical pump 40.

In Fig. 4, the SOFC 30 is accommodated in the first thermally insulated space 51a that is the same as the second thermally insulated space 51b in which the electrochemical pump 40 is accommodated, that is, these components are accommodated in the single space in the thermally insulating member 50. On the other hand, the thermally insulating member 50 in Fig. 5 forms the first thermally insulated space 51a and the second thermally insulated space 51b that are separate and independent from each other and are insulated separately from each other. Thus, the first thermally insulated space 51a is held at a range of operation temperatures suited for the SOFC 30, and the second thermally insulated space 51b is maintained at a range of operation temperatures suited for the electrochemical pump 40. In this manner, the power generation efficiency of the SOFC 30, and the hydrogen separation efficiency of the electrochemical pump 40 may be enhanced.

The thermally insulating member 50 includes a first thermally insulating member 50a that forms the first thermally insulated space 51a, and a second thermally insulating member 50b that forms the second thermally insulated space 51b. The first thermally insulating member 50a insulates the SOFC 30, and the second thermally insulating member 50b insulates the electrochemical pump 40. The first thermally insulating member 50a and the second thermally insulating member 50b may be formed separately from each other. In this case, the SOFC 30 and the electrochemical pump 40 may be arranged with a greater degree of freedom. Alternatively, the first thermally insulating member 50a and the second thermally insulating member 50b may be integral with each other, and the thermally insulating member 50 may have a thermally insulating wall that separates the first thermally insulated space 51a and the second thermally insulated space 51b from each other. In this case, the increase in cost and size associated with the thermally insulating member 50 may be reduced.

### <Modification Example 2>

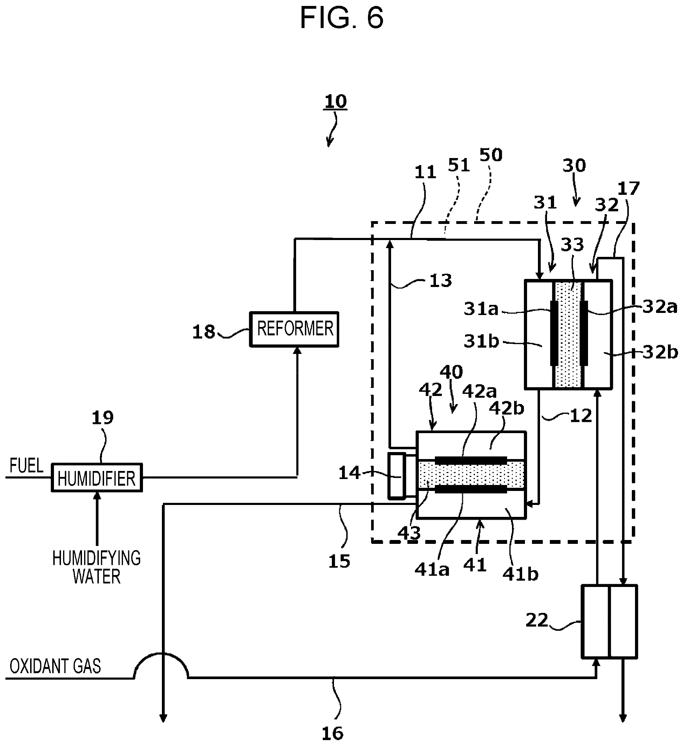

In a fuel cell system 10 according to Modification Example 2 of the third embodiment, as illustrated in Fig. 6, a thermally insulating member 50 accommodates the recycle gas line 13 in a thermally insulated space 51. The thermally insulated space 51 is common to the SOFC 30, the electrochemical pump 40 and the recycle gas line 13, that is, these components are all arranged in the single thermally insulated space 51. The thermally insulating member 50 covers the whole of the SOFC 30, the electrochemical pump 40 and the recycle gas line 13 together.

As described above, the SOFC 30, the electrochemical pump 40 and the recycle gas line 13 are covered with the common thermally insulating member 50, and thus the increase in cost and size associated with the thermally insulating member 50 can be reduced. Furthermore, the thermally insulating member 50 reduces the temperature drop of the gas circulating in the SOFC 30, the electrochemical pump 40 and the recycle gas line 13 and thus can reduce the heat loss in the fuel cell system 10. The heat loss of the fuel cell system 10 can be further reduced by using the heat from the exothermic reactions in the SOFC 30 and the electrochemical pump 40 to heat the recycle gas line 13.

The fuel cell system 10 may further include a control device such as a computer, and a regulating valve in the anode gas supply line. In this case, the feed rate of the fuel gas may be controlled through the regulating valve based on the program stored in the control device and by the operation of the control device by the operator so as to maintain the heat balance in the fuel cell system 10.

Similarly to Modification Example 1, the thermally insulated space 51 may have a first thermally insulated space 51a accommodating the SOFC 30, and a second thermally insulated space 51b accommodating the electrochemical pump 40. In this case, the recycle gas line 13 may be accommodated in any of the first thermally insulated space 51a, the second thermally insulated space 51b, and a third thermally insulated space other than the first thermally insulated space 51a and the second thermally insulated space 51b. That is, the thermally insulating member 50 may include a first thermally insulating member 50a, a second thermally insulating member 50b, and a third thermally insulating member that forms the third thermally insulated space.

### <Modification Example 3>

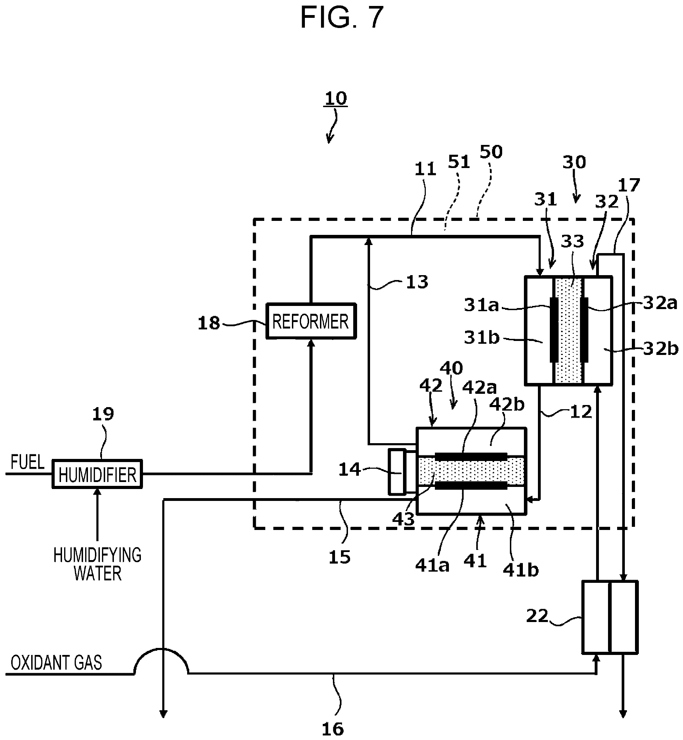

As illustrated in Fig. 7, a fuel cell system 10 according to Modification Example 3 of the third embodiment further includes a reformer 18 that is provided on the anode supply line 11 and reforms the fuel to produce a fuel gas. A thermally insulating member 50 accommodates the reformer 18 in a thermally insulated space 51.

Specifically, the thermally insulating member 50 covers the SOFC 30, the electrochemical pump 40 and the reformer 18 all together. The thermally insulated space 51 is common to the SOFC 30, the electrochemical pump 40 and the reformer 18, that is, these components are all arranged in the single thermally insulated space 51.

As described above, the SOFC 30, the electrochemical pump 40 and the reformer 18 are covered with the common thermally insulating member 50, and thus the increase in cost and size associated with the thermally insulating member 50 can be reduced. Furthermore, the heat loss of the fuel cell system 10 can be reduced by using the heat from the exothermic reactions in the SOFC 30 and the electrochemical pump 40 to heat the reformer 18.

Furthermore, the thermally insulating member 50 may cover the SOFC 30, the electrochemical pump 40, the recycle gas line 13 and the reformer 18 all together. By the sharing of the thermally insulating member 50, the increase in cost and size associated with the thermally insulating member 50 can be reduced. When the thermally insulated space 51 is common to the SOFC 30, the electrochemical pump 40, the recycle gas line 13 and the reformer 18, that is, when these components are all arranged in the single thermally insulated space 51, the thermally insulating member 50 reduces the temperature drop of the gas circulating in the SOFC 30, the electrochemical pump 40 and the recycle gas line 13 and thus can reduce the heat loss in the fuel cell system 10.

Similarly to Modification Example 1, the thermally insulated space 51 may have a first thermally insulated space 51a accommodating the SOFC 30, and a second thermally insulated space 51b accommodating the electrochemical pump 40. In this case, the reformer 18 may be accommodated in any of the first thermally insulated space 51a, the second thermally insulated space 51b, and a fourth thermally insulated space other than the first thermally insulated space 51a and the second thermally insulated space 51b. That is, the thermally insulating member 50 may include a first thermally insulating member 50a, a second thermally insulating member 50b, and a fourth thermally insulating member that forms the fourth thermally insulated space.

### <Modification Example 4>

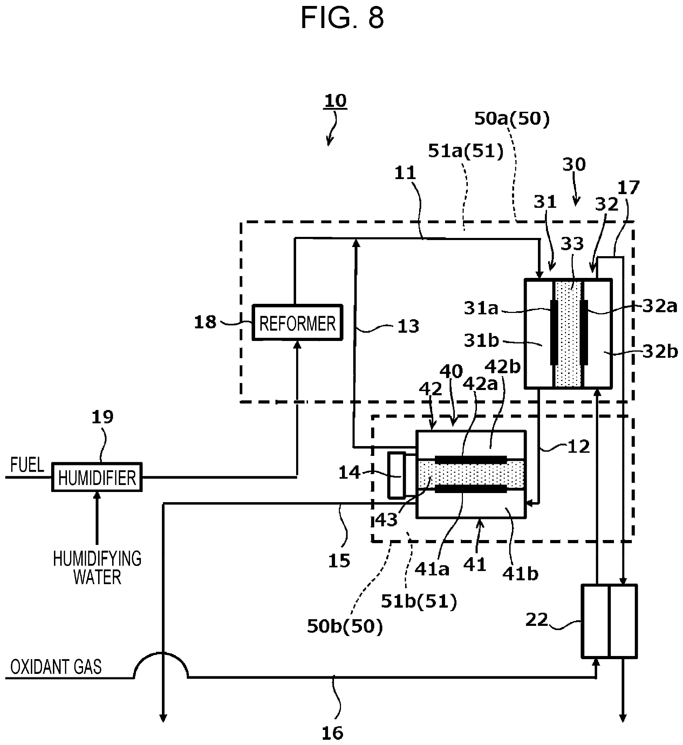

In a fuel cell system 10 according to Modification Example 4 of the third embodiment, as illustrated in Fig. 8, a thermally insulated space 51 includes, similarly to Modification Example 1, a first thermally insulated space 51a accommodating the SOFC 30, and a second thermally insulated space 51b insulated from the first thermally insulated space 51a and accommodating the electrochemical pump 40. The fuel cell system 10 further includes a reformer 18 that is provided on the anode supply line 11 and reforms the fuel to produce a fuel gas. The thermally insulating member 50 accommodates the reformer 18 in the first thermally insulated space 51a. In this manner, the thermally insulating member 50 reduces the temperature drop of the gas circulating in the SOFC 30, the electrochemical pump 40, the reformer 18 and the recycle gas line 13 and thus can reduce the heat loss in the fuel cell system 10.

### <Modification Example 5>

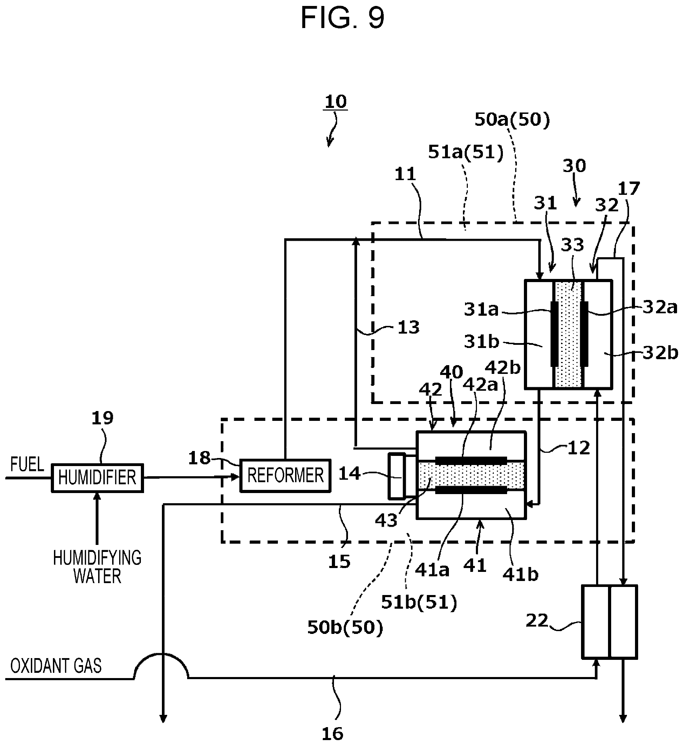

In a fuel cell system 10 according to Modification Example 5 of the third embodiment, as illustrated in Fig. 9, a thermally insulated space 51 includes, similarly to Modification Example 1, a first thermally insulated space 51a accommodating the SOFC 30, and a second thermally insulated space 51b insulated from the first thermally insulated space 51a and accommodating the electrochemical pump 40. The fuel cell system 10 further includes a reformer 18 that is provided on the anode supply line 11 and reforms the fuel to produce a fuel gas. The thermally insulating member 50 accommodates the reformer 18 in the second thermally insulated space 51b. In this manner, the thermally insulating member 50 reduces the temperature drop of the gas circulating in the SOFC 30, the electrochemical pump 40, the reformer 18 and the recycle gas line 13 and thus can reduce the heat loss in the fuel cell system 10. While Fig. 9 illustrates the power supply 14 and portions of the lines such as the anode supply line 11, the recycle gas line 13 and the first asode discharge line 15 being accommodated in the second thermally insulated space 51b, these may be actually disposed outside the second thermally insulated space 51b.

### [Fourth embodiment]

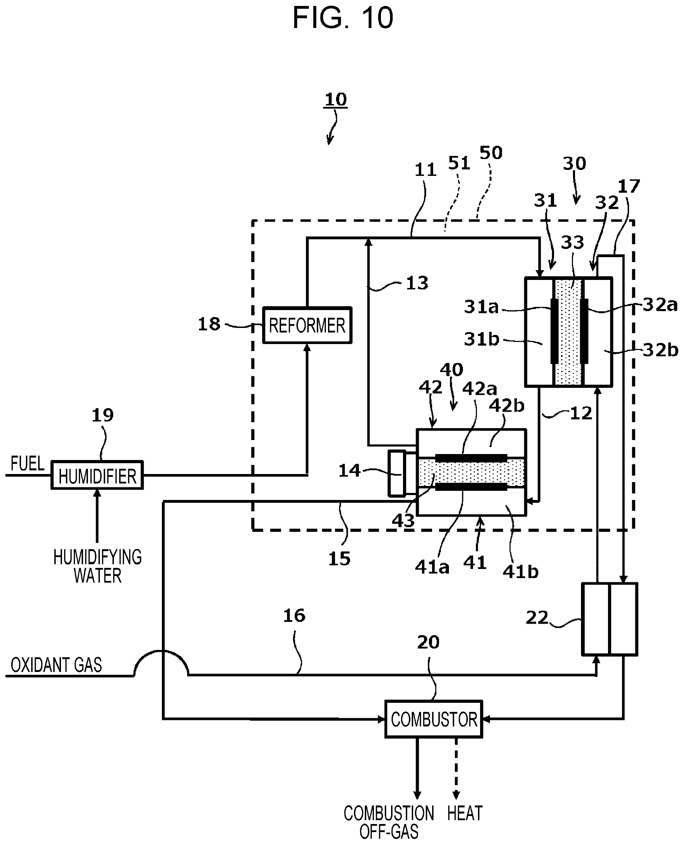

As illustrated in Fig. 10, a fuel cell system 10 according to the fourth embodiment includes a first anode discharge line 15 that is connected to the first anode 41 and through which the first anode off-gas discharged from the first anode 41 flows. The fuel cell system 10 differs from the fuel cell system 10 according to any of the first to third embodiments and Modification Examples in that the fuel cell system 10 includes a combustor 20 that is provided on the first anode discharge line 15 and combusts the first anode off-gas.

Specifically, the first anode discharge line 15 is connected to the outlet of the first anode 41 to allow passage of the first anode off-gas discharged from the first anode 41. The first anode off-gas is a gas that is left after hydrogen is separated from the second anode off-gas by the electrochemical pump 40. Thus, the first anode off-gas includes a combustible gas that is left after the chemical reactions at the SOFC 30 and after hydrogen is separated from the residual fuel gas at the electrochemical pump 40.

The combustor 20 is provided on the first anode discharge line 15 and is supplied with the first anode off-gas from the first anode discharge line 15 to combust the combustible residual gas in the first anode off-gas, thus discharging the combustion off-gas. When carbon monoxide is contained in the residual gas, the carbon monoxide can be combusted and be discharged as carbon dioxide. Furthermore, the heat generated by the combustion may be used to heat the components in the fuel cell system 10 such as the reformer 18, and thereby the heat loss in the fuel cell system 10 can be reduced. When the fuel cell system 10 has a water storage tank, the heat generated by the combustion may be used to heat the water storage tank, and thereby the heat loss in the fuel cell system 10 can be reduced.

After hydrogen is separated from the second anode off-gas from the SOFC 30 at the electrochemical pump 40, the first cathode off-gas that remains is reused as the fuel gas in the SOFC 30. Thus, the first anode off-gas discharged from the electrochemical pump 40 contains less hydrogen than the second anode off-gas, and the amount of heat generated by the combustion of the first anode off-gas is smaller than that of the second anode off-gas. Even in this case, because the operation temperatures of the SOFC 30 and of the electrochemical pump 40 are the same as or close to each other, a small amount of heat is sufficient for heating the first cathode off-gas that is delivered from the electrochemical pump 40 to the SOFC 30. Thus, a situation can be avoided in which the thermally self-sustaining operation of the SOFC 30 fails due to insufficient heating of the first anode off-gas at the combustor 20.

The combustor 20 may be provided on the first anode discharge line 15 and the cathode discharge line 17. In this case, the combustor 20 is supplied with the first anode off-gas from the first anode discharge line 15 and the second cathode off-gas from the cathode discharge line 17. Thus, the combustor 20 can combust the first anode off-gas efficiently utilizing the residual oxidant gas in the second cathode off-gas. Furthermore, the combustor 20 may be accommodated in the thermally insulated space 40 together with the electrochemical pump 40. Alternatively, similarly to, for example, Fig. 5, the thermally insulated space may be divided into a first thermally insulated space 51a and a second thermally insulated space 51b, and the SOFC 30 may be accommodated in the first thermally insulated space 51a, and the combustor 20 together with the electrochemical pump 40 may be accommodated in the second thermally insulated space 51b.

### [Fifth embodiment]

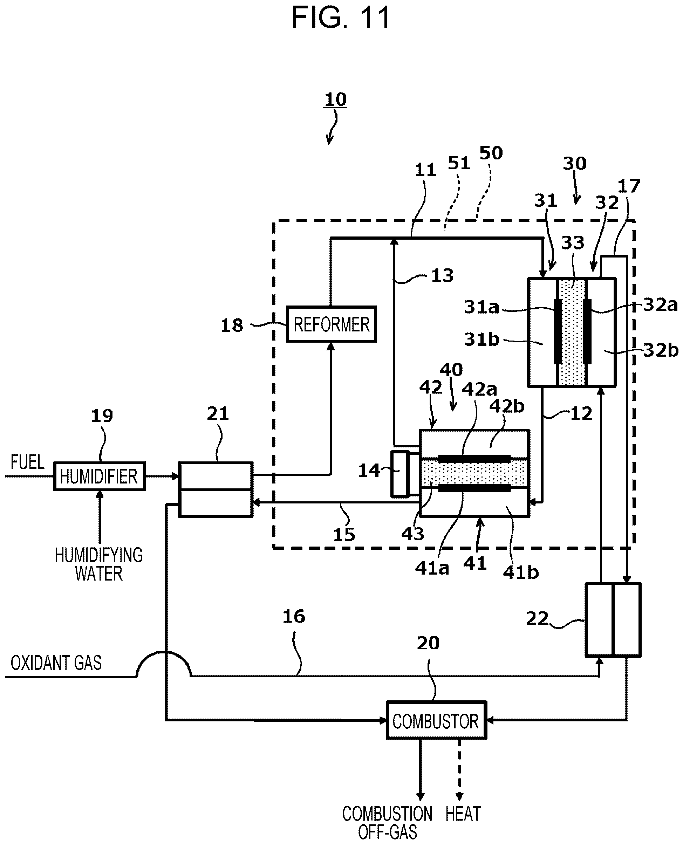

As illustrated in Fig. 11, a fuel cell system 10 according to the fifth embodiment differs from the fuel cell system 10 according to any of the first to fourth embodiments and Modification Examples in that the fuel cell system 10 includes a reformer 18 that is provided on the anode supply line 11 and reforms the fuel to produce a fuel gas, and a first heat exchanger 21 that exchanges heat between the first anode off-gas discharged from the first anode 41, and the fuel gas to be supplied to the reformer 18.

The first heat exchanger 21 is disposed on the first anode discharge line 15 and on the anode supply line 11 upstream of the reformer 18. When the fuel cell system 10 includes a humidifier 19, the first heat exchanger 21 is disposed on the anode supply line 11 between the humidifier 19 and the reformer 18. When the fuel cell system 10 includes a combustor 20, the first heat exchanger 21 is disposed on the first anode discharge line 15 between the electrochemical pump 40 and the combustor 20.

The first heat exchanger 21 exchanges heat between the first anode off-gas in the first anode discharge line 15, and the fuel gas in the anode supply line 11. The first anode off-gas has a high temperature because it is discharged from the electrochemical pump 40 that is operated at a high temperature. Thus, the fuel gas is heated by the high-temperature first anode off-gas.

The fuel gas that has been heated is then supplied to the reformer 18. In the reformer 18, the fuel gas is reformed at a high temperature. The heating of the fuel gas is made utilizing the heat of the first anode off-gas, and thus the heat loss in the fuel cell system 10 can be reduced.

### [Sixth embodiment]

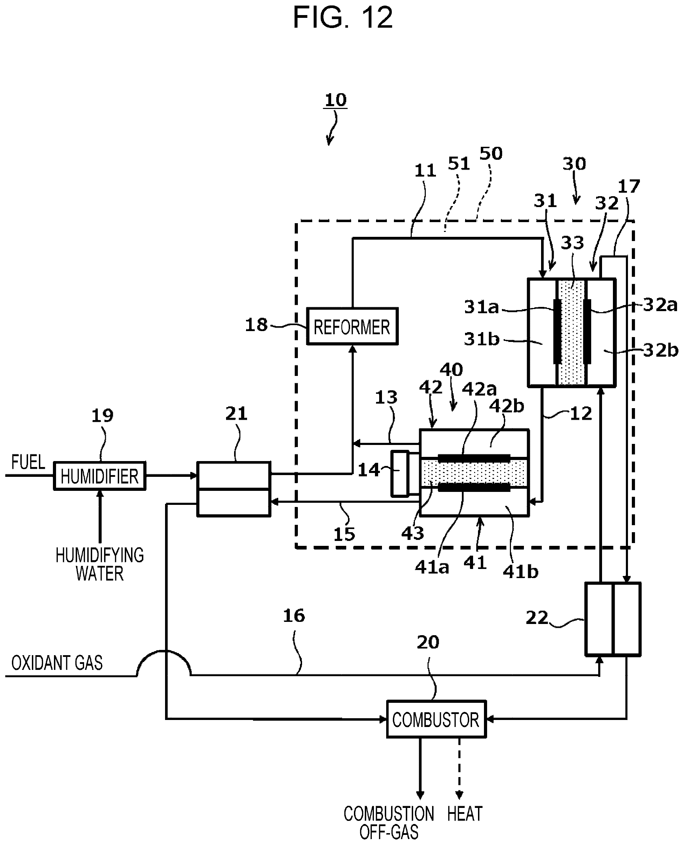

As illustrated in Fig. 12, a fuel cell system 10 according to the sixth embodiment differs from the fuel cell system 10 according to any of the first to fifth embodiments and Modification Examples in that the fuel cell system 10 includes a cathode supply line 16 that is connected to the second cathode 32 and through which the oxidant gas is supplied to the second cathode 32, a cathode discharge line 17 that is connected to the second cathode 32 and through which the second cathode off-gas discharged from the second cathode 32 flows, and a second heat exchanger 22 that exchanges heat between the oxidant gas to be supplied to the second cathode 32, and the second cathode off-gas discharged from the second cathode 32.

The second heat exchanger 22 is disposed on the cathode supply line 16 and the cathode discharge line 17. When the fuel cell system 10 includes a combustor 20, the second heat exchanger 22 is disposed on the cathode discharge line 17 between the SOFC 30 and the combustor 20.

The second heat exchanger 22 exchanges heat between the oxidant gas in the cathode supply line 16, and the second cathode off-gas in the cathode discharge line 17. The second cathode off-gas has a high temperature because it is discharged from the SOFC 30 that is operated at a high temperature. Thus, the oxidant gas is heated by the high-temperature second cathode off-gas.

The oxidant gas that has been heated is then supplied to the SOFC 30 and is used to generate electricity by chemical reaction with the fuel gas at the SOFC 30. The heating of the oxidant gas is made utilizing the heat of the second cathode off-gas, and thus the heat loss in the fuel cell system 10 can be reduced.

### <Other modification examples>

When the fuel cell system 10 according to any of the second to sixth embodiments and Modification Examples includes a reformer 18, as illustrated in Fig. 11, the recycle gas line 13 in the fuel cell system 10 may be connected to the anode supply line 11 upstream of the reformer 18. When the fuel cell system 10 further includes a humidifier 19, the recycle gas line 13 may be connected to the anode supply line 11 between the humidifier 19 and the reformer 18.

When the fuel cell system 10 further includes a first heat exchanger 21, the recycle gas line 13 may be connected to the anode supply line 11 between the first heat exchanger 21 and the reformer 18. In this case, the first cathode off-gas being returned through the recycle gas line 13 is not supplied to the first heat exchanger 21, and thus the first heat exchanger 21 can efficiently increase the temperature of the fuel.

The fuel cell system 10 according to any of the embodiments and Modification Examples described hereinabove may include a heater that heats at least one of the SOFC 30 and the electrochemical pump 40. The heater may be a combustion device such as a burner. The combustion device may be connected to a branch from the second anode discharge line 12, and may combust the second anode off-gas supplied from the second anode discharge line 12 through the branch.

In the fuel cell systems 10 according to all the embodiments and Modification Examples described hereinabove, the SOFC 30 may be an internally reforming SOFC and the fuel gas that is used may be a hydrogen-containing gas that is a hydrocarbon gas such as methane. For example, such a gas may be supplied from an infrastructure for distribution of a city gas such as a hydrocarbon gas. In this case, the fuel gas is internally reformed at the second anode 31 of the SOFC 30 to generate hydrogen, which is used to produce electricity. Hydrogen that is not used for the power generation is supplied as the second anode off-gas to the electrochemical pump 40.

While the SOFC 30 used in the fuel cell systems 10 according to all the embodiments and Modification Examples described hereinabove is an oxide ion conductive type, the SOFC 30 may be a proton conductive type. In the proton conductive SOFC 30, hydrogen in the fuel gas is reduced at the second anode 31 as illustrated in the chemical formula (8) below to produce protons and electrons, and the electrons flow through an external circuit to generate electricity. The protons are conducted through the second electrolyte membrane 33 from the second anode 31 to the second cathode 32. At the second cathode 32, the protons are oxidized by oxygen in the oxide gas as illustrated in the chemical formula (9) below to generate water.
Second anode:

   2H₂ → 4H⁺ + 4e⁻ (8)
Second cathode:

   4H⁺ + O₂ + 4e⁻ → 2H₂O (9)

Subsequently, the second anode off-gas is supplied from the second anode 31 of the SOFC 30 to the first anode 41 of the electrochemical pump 40 through the second anode discharge line 12. The electrochemical pump 40, which is energized by a current from the power supply 14, separates hydrogen from the second anode off-gas.

In the oxide ion conductive SOFC 30, water is generated at the second anode 31, and thus the second anode off-gas contains water and so do the first cathode off-gas and the combustion off-gas originating from the second anode off-gas. The water may be condensed and be used in the humidifier 19. On the other hand, the proton conductive SOFC 30 generates water at the second cathode 32, and thus the second cathode off-gas and the combustion off-gas originating from the second cathode off-gas contain water. The water may be condensed and be used in the humidifier 19.

In the fuel cell systems 10 according to all the embodiments and Modification Examples described hereinabove, the SOFC 30 and the electrochemical pump 40 may be integral with each other. In this case, the cells in the SOFC 30 and the cells in the electrochemical pump 40 may be laminated together to form a stack in which the second anodes 31 in the SOFC 30 and the first anodes 41 in the electrochemical pump 40 are parallel to one another. The SOFC 30 is arranged so that the second anode 31 is closer to the electrochemical pump 40 than the second cathode 32, and the electrochemical pump 40 is arranged so that the first anode 41 is closer to the SOFC 30 than the first cathode 42. While Figs. 3 to 12 illustrate no temperature meters, the fuel cell systems 10 according to the embodiments other than the first embodiment and according to Modification Examples may include temperature meters 30a and 40a.

All the embodiments discussed hereinabove may be combined with one another as long as the combination does not exclude any features of the embodiments that are combined. Numerous improvements and alternative embodiments of the present disclosure are apparent to those skilled in the art in view of the foregoing description. Thus, the foregoing description should be construed as illustrative only, and is provided for the purpose of teaching the best mode of carrying out the present disclosure to those skilled in the art. The details of the structures and/or the functions of the present disclosure may be substantially changed without departing from the spirit of the present disclosure.

### Industrial Applicability

The fuel cell system of the present disclosure is a useful fuel cell system that realizes a small heat loss and can be downsized while achieving an enhancement in fuel utilization rate.

### Reference Signs List

- 10:: fuel cell system
- 11:: anode supply line
- 12:: second anode discharge line
- 13:: recycle gas line
- 14:: power supply
- 15:: first anode discharge line
- 16:: cathode supply line
- 17:: cathode discharge line
- 18:: reformer
- 20:: combustor
- 21:: first heat exchanger
- 22:: second heat exchanger
- 30:: SOFC (solid oxide fuel cell)
- 31:: second anode
- 32:: second cathode
- 33:: second electrolyte membrane
- 40:: electrochemical pump
- 41:: first anode
- 42:: first cathode
- 43:: first electrolyte membrane
- 50:: thermally insulating member
- 51:: thermally insulated space
- 51a:: first thermally insulated space
- 51b:: second thermally insulated space

## Claims

1. An electrochemical pump comprising a first anode, a first cathode, and a first electrolyte membrane including a proton conductive oxide, the electrochemical pump separating hydrogen from a gas containing the hydrogen.

2. The electrochemical pump according to claim 1, wherein
the first electrolyte membrane includes at least one selected from the group consisting of A1Zr₁₋ₓ₁M1ₓ₁O_{3-δ}, A2Ce₁₋ₓ₂M2ₓ₂O_{3-δ} and A3Zr_{1-x3-y3}Ceₓ₃M3_{y3}O_{3-δ},
A1, A2 and A3 each include at least one element selected from the group consisting of Ba, Sr and Ca, M1, M2 and M3 each include at least one selected from the group consisting of Pr, Nd, Pm, Sm, Eu, Gd, Tb, Dy, Ho, Er, Tm, Yb, Y, Sc, In and Lu,
x1 satisfies 0 < x1 < 1,
x2 satisfies 0 < x2 < 1,
x3 satisfies 0 < x3 < 1, and
y3 satisfies 0 < y3 < 1.

3. The electrochemical pump according to claim 2, wherein A1, A2 and A3 in the first electrolyte membrane include Ba.

4. The electrochemical pump according to claim 2 or 3, wherein the first electrolyte membrane includes BaZr₁₋ₓ₁M1ₓ₁O_{3-δ}.

5. The electrochemical pump according to claim 4, wherein M1 in the first electrolyte membrane includes at least Yb.

6. The electrochemical pump according to any one of claims 1 to 5, wherein at least part of the electrochemical pump is operated at a temperature of greater than or equal to 400°C.

7. The electrochemical pump according to any one of claims 1 to 6, wherein the electrochemical pump is accommodated together with a combustor, a fuel cell or a reformer in a thermally insulated space formed by a thermally insulating member.

8. A fuel cell system comprising:
the electrochemical pump described in any one of claims 1 to 5;
a solid oxide fuel cell that includes a second anode, a second cathode, and a second electrolyte membrane including a solid oxide electrolyte, and generates electricity by reacting a fuel gas and an oxidant gas with each other;
an anode supply line that is connected to the second anode and through which the fuel gas is supplied to the second anode;
a second anode discharge line that is connected to the second anode and the first anode and through which a second anode off-gas discharged from the second anode and containing the hydrogen is supplied to the first anode;
a recycle gas line that is connected to the first cathode and the anode supply line and through which a first cathode off-gas that contains the hydrogen separated at the electrochemical pump and is discharged from the first cathode is returned to the anode supply line; and
a power supply that is connected to the electrochemical pump and transmits power to the electrochemical pump.

9. The fuel cell system according to claim 8, wherein at least part of the electrochemical pump is operated at a temperature of greater than or equal to 400°C.

10. The fuel cell system according to claim 8, wherein the temperature difference between the temperature T1 of the solid oxide fuel cell and the temperature T2 of the electrochemical pump is less than or equal to 200°C when the solid oxide fuel cell is operated at T1 of greater than or equal to 600 and less than or equal to 800°C, and is less than or equal to 400°C when the solid oxide fuel cell is operated while T1 is greater than or equal to 800°C and less than or equal to 1000°C.

11. The fuel cell system according to claim 10, wherein the temperature T1 of the solid oxide fuel cell is higher than the temperature T2 of the electrochemical pump.

12. The fuel cell system according to any one of claims 8 to 11, further comprises a reformer that is provided on the anode supply line and reforms a fuel to produce the fuel gas.

13. The fuel cell system according to any one of claims 8 to 12, further comprises a thermally insulating member that accommodates the solid oxide fuel cell and the electrochemical pump in a thermally insulated space, wherein the solid oxide fuel cell and the electrochemical pump are accommodated in the same thermally insulated space.

14. The fuel cell system according to claim 12, further comprises a thermally insulating member that accommodates the electrochemical pump and the reformer in a thermally insulated space, wherein the electrochemical pump and the reformer are accommodated in the same thermally insulated space.

15. The fuel cell system according to any one of claims 8 to 12, further comprises a thermally insulating member that accommodates the solid oxide fuel cell and the electrochemical pump in a thermally insulated space, wherein the thermally insulated space includes a first thermally insulated space accommodating the solid oxide fuel cell, and a second thermally insulated space insulated from the first thermally insulated space and accommodating the electrochemical pump.

16. The fuel cell system according to claim 12, further comprises a thermally insulating member that accommodates the reformer and the electrochemical pump in a thermally insulated space, and the thermally insulated space includes a first thermally insulated space accommodating the reformer, wherein a second thermally insulated space insulated from the first thermally insulated space and accommodating the electrochemical pump.

17. The fuel cell system according to any one of claims 8 to 16, wherein the thermally insulating member accommodates the recycle gas line in the thermally insulated space.

18. The fuel cell system according to any one of claims 8 to 17, further comprises:
a first anode discharge line that is connected to the first anode and through which a first anode off-gas discharged from the first anode flows; and
a combustor that is provided on the first anode discharge line and combusts the first anode off-gas.

19. The fuel cell system according to claim 18, further comprises:
a reformer that is provided on the anode supply line and reforms a fuel to produce the fuel gas; and
a first heat exchanger that exchanges heat between the first anode off-gas discharged from the first anode, and the fuel to be supplied to the reformer.

20. The fuel cell system according to any one of claims 8 to 19, further comprises:
a cathode supply line that is connected to the second cathode and through which the oxidant gas is supplied to the second cathode;
a cathode discharge line that is connected to the second cathode and through which a second cathode off-gas discharged from the second cathode flows; and
a second heat exchanger that exchanges heat between the oxidant gas to be supplied to the second cathode, and the second cathode off-gas discharged from the second cathode.

21. The fuel cell system according to any one of claims 8 to 19, further comprises a reformer that is provided on the anode supply line and reforms a fuel to produce the fuel gas, and
the recycle gas line is connected to the anode supply line between the reformer and the second anode.
